# FASCICULE DE BREVET EUROPEEN

(11) **EP 0 901 867 B1**
(45) Date de publication et mention de la délivrance du brevet: **03.01.2001**
(21) Numéro de dépôt: 98402628.6
(22) Date de dépôt: 22.10.1998
(51) Int. Cl.: B23K 10/00

(54) **Procédé et installation automatique de marquage par jet de plasma, notamment des métaux**
Verfahren und automatische Vorrichtung zum Signieren durch Plasma, insbesondere von Metallen
Method and automatic apparatus for marking by means of a plasma jet, in particular of metals

(43) Date de publication de la demande: 17.03.1999
(73) Titulaire: LA SOUDURE AUTOGENE FRANCAISE, F-75007 Paris (FR)
(72) Inventeur: Delzenne, Michel, 95130 Franconville (FR)
(74) Mandataire: Le Moenner, Gabriel

(56) Documents cités:
- EP-A- 0 040 925
- EP-A- 0 599 709
- EP-A- 0 865 857
- US-A- 5 760 363
- US-A- 5 773 788
- PATENT ABSTRACTS OF JAPAN vol. 012, no. 109 (M-682), 8 avril 1988 & JP 62 238020 A (KOIKE SANSO KOGYO CO LTD), 19 octobre 1987
- PATENT ABSTRACTS OF JAPAN vol. 014, no. 323 (M-0997), 11 juillet 1990 & JP 02 108464 A (BROTHER IND LTD), 20 avril 1990

## Description

L'invention se rapporte au domaine des installations et procédés automatiques de marquage par jet de plasma de pièces, notamment en matériaux métalliques ou plastiques, telles des plaques ou des tôles d'acier.

Les machines ou installations automatiques de coupage par jet de plasma sont utilisées depuis de nombreuses années pour la découpe ou coupage par jet de plasma de formes géométriques ou non dans des pièces métalliques, telles des plaques ou des tôles, notamment en matériaux ferreux et non-ferreux.

Le coupage plasma est basé sur les effets thermiques et cinétiques combinés d'un jet plasma, c'est-à-dire d'un arc électrique créé dans un milieu gazeux ionisé fortement constricté établi entre, d'une part, un élément émissif de la torche à plasma formant cathode et, d'autre part, la tôle ou pièce à découper formant anode, ces deux électrodes, à savoir la cathode et l'anode, étant respectivement connectées aux bornes négative et positive d'une source électrique de courant continu, tel un générateur de courant.

Au vu des progrès réalisés, tant en ce qui concerne les caractéristiques des jets plasma mis en oeuvre (composition du gaz plasma, structure des électrodes de la torche plasma, puissance et forme du jet plasma...) qu'en ce qui concerne les machines de coupage elles-mêmes (pilotage par commandes numériques, centres de programmation hors ligne, actionneurs d'axes, structure mécanique pour le guidage et l'entraînement des axes....), il est désormais possible d'intégrer ce type d'installations de coupage plasma dans une chaîne ou un processus de fabrication globale, dans le but d'améliorer la productivité et/ou le rendement de production.

Toutefois, les machines ou installations de coupage automatique par jet de plasma existant actuellement ne sont utilisables que pour découper les matériaux.

En d'autres termes, le jet de plasma délivré par une torche à plasma équipant une telle installation de coupage va opérer une fusion selon toute l'épaisseur de la pièce métallique à usiner, de manière à obtenir une découpe de cette pièce selon une géométrie prédéfinie.

Or, dans un processus de fabrication, au moins trois types de compléments à l'opération de découpe s'avèrent souvent nécessaires, à savoir le traçage de repères géométriques sur les pièces, le repérage d'identification des pièces coupées par un numéro ou un code convenu, et le marquage selon un code convenu pour assurer une traçabilité ou un suivi des pièces fabriquées.

En général, ces opérations complémentaires sont subséquentes à l'opération de coupage plasma de la pièce, mais il n'est pas exclu qu'elles puissent ou doivent également être mises en oeuvre, dans certains cas, préalablement à ladite opération de coupage plasma.

Plus précisément, une opération de traçage de repères géométriques sur des pièces découpées ou à découper peut consister à tracer ou à marquer notamment :
- soit des lignes continues ou discontinues de positionnement sur des pièces ou éléments destinés à être soudés ou assemblés ultérieurement ;
- soit des points de centre ou des axes de repérage des centres pour faciliter des opérations ultérieures de perçage mécanique d'orifices de diamètre et de position prédéfinis sur les pièces ;
- soit des lignes ou repères pour le positionnement d'outillages de mise en forme ultérieure des pièces découpées, par exemple d'outillages de pliage desdites pièces.

En outre, le repérage d'identification de pièces coupées ou à couper par un numéro ou un code convenu est aussi utilisé pour repérer différentes pièces afin de les identifier plus facilement et d'éviter toute confusion entre ces différentes pièces lors des opérations ultérieures. En effet, le repérage d'identification présente notamment l'avantage de pouvoir exécuter des programmes automatiques plus ou moins complexes de découpe au jet de plasma de pièces métallique de géométries très variées au sein d'un format standard de tôle, en imbriquant lesdites pièces à couper les unes dans les autres, de manière à minimiser les chutes ou déchets métalliques et donc à optimiser les coûts de production.

Par ailleurs, le marquage de pièces selon un code convenu permet d'assurer la traçabilité de ces pièces, ce qui est quasi indispensable pour les entreprises bénéficiant d'une certification, telle une norme, attestant de la qualité de leurs fabrications, lesquelles doivent pouvoir assurer un suivi des produits fabriqués, lesquels doivent être en conformité avec cette certification.

Actuellement, il existe plusieurs systèmes de marquage utilisés ou utilisables selon leurs caractéristiques propres, la nature des travaux à exécuter et la nature du matériau ou de la pièce à identifier, à savoir, d'une part, les marqueurs dits 'à froids', tels le marquage par jet d'encre, le repérage au stylo feutre ou le poinçonnage au burin pneumatique ou électrique et, d'autre part, les marqueurs dits 'à chauds', tels le chauffage à la flamme de la pièce à marquer avec projection d'une poudre de marquage, par exemple une poudre de zinc, ou le marquage de la pièce par un faisceau laser.

Or, ces différents procédés de marquage présentent, selon le cas, des inconvénients ayant plus ou moins de répercussions négatives au plan industriel.

Ainsi, marquer une pièce par un jet d'encre ou au stylo feutre n'est pas idéal car cette technique de marquage ne peut pas être appliquée à certains matériaux, notamment aux matériaux sur lesquels les pigments d'encre n'adhèrent pas ou mal.

De plus, on a constaté en pratique que ce type de marquage est susceptible, dans certains cas, de s'effacer assez rapidement au cours du temps et que les pièces se retrouvent alors sans marquage d'identification, ce qui pose des problèmes de différentiation entre ces diverses pièces dans les étapes subséquentes du procédé de production ou d'usinage.

De manière analogue, le marquage au moyen d'un burin pneumatique ou électrique peut engendrer des problèmes de déformation de la pièce, d'autant plus néfastes que la pièce est d'épaisseur faible.

En outre, la technique de marquage avec projection de poudre métallique ne peut pas être appliquée à tous les matériaux, étant donné que se pose notamment le problème de la compatibilité de la poudre de marquage avec celle du matériau constituant la pièce à marquer.

De plus, ces techniques de marquage sont souvent limitées à un matériau ou à une famille de matériaux donnés, par exemple les aciers, et ne peuvent pas, en général, être appliquées à des pièces en matériaux de natures très différentes, par exemples des pièces métalliques et des pièces en polymères ou plastiques.

Par ailleurs, le document EP-A-865857 décrit un procédé de marquage de tôles revêtues de peinture, dans lequel on réalise des marques sur les tôles en brûlant localement la peinture avec un jeu de plasma gainé par un jet d'eau de refroidissement.

Or, on comprend que ce procédé est limité au marquage de tôles revêtues et ne peut pas être appliqué à tous les types de tôles, c'est-à-dire revêtues ou non.

En outre, selon ce procédé, la surface supérieure de la tôle n'est pas entamée par le jet de plasma, c'est-à-dire ni décolorée, ni fondue partiellement selon l'épaisseur, étant donné que seule le revêtement de peinture est brûlé.

Par ailleurs, les documents JP-A-62238020 et US-A-5,773,788 décrivent une installation de marquage plasma dotée seulement d'une torche de marquage plasma permettant de réaliser des marques sur des pièces métalliques.

De façon analogue, le document JP-A-02108464 décrit une installation de coupage plasma dotée d'une torche de coupage plasma. On commence à couper la tôle puis, pendant la coupe, on fait varier la vitesse de la torche ou l'intensité du courant de coupe pour permettre de réaliser un marquage de la tôle. En d'autres termes, le coupage et le marquage sont opérés au moyen de la même torche à plasma.

De façon analogue, le document US-A-5,760,363 enseigne, quant à lui, une installation dotée d'une torche de coupage plasma ou de marquage plasma ; le coupage et le marquage étant opérés au moyen de la même torche à plasma.

En outre, le document EP-A- 40 925 concerne une installation de coupage plasma dotée d'une torche de coupage plasma et le document EP-A599 709 porte sur une torche de coupage plasma à tête démontable.

Cependant, quelle que soit la technique choisie, se pose aussi le problème de l'automatisation du marquage et de son séquencement dans le processus global de fabrication, notamment son séquencement par rapport au coupage et/ou au soudage, préalable ou subséquent, des pièces.

Cela impose que la machine ou l'installation de marquage des pièces soit intégrée à la chaîne de production, en amont ou en aval de l'installation de coupage etlou de soudage; soit gérée, de préférence, par les moyens de pilotage et/ou de commande de l'installation globale, de manière à commander sa mise en marche et son arrêt aux moments opportuns ; soit solidaire, en ce qui concerne la tête de marquage proprement-dite, de la structure support la torche de découpe plasma pour pouvoir, de préférence, utiliser les mêmes axes de déplacement que ceux de la ou les torches de découpe et/ou de soudage et bénéficier ainsi d'une gestion unique des axes par des moyens de commande du déplacement, telle une commande numérique, de manière à obtenir une même précision de positionnement.

Un but de la présente invention est de proposer un procédé et une installation automatique combinée permettant d'obtenir, d'une part, un marquage plasma et, d'autre part, un coupage et/ou un soudage d'une pièce à travailler.

Un autre but de la présente invention est de proposer un procédé de marquage plasma et de coupage ou de soudage efficace pouvant être appliqué à différents types de matériaux, tels des matériaux métalliques ou des matériaux plastiques, lequel procédé ne présente pas les inconvénients et problèmes connus jusqu'alors.

L'invention concerne une installation automatique combinée de marquage par jet de plasma et de coupage et/ou de soudage d'au moins une partie d'au moins une pièce à marquer et à couper et/ou à souder comprenant:
- au moins une structure-porteuse portant au moins une torche de marquage plasma et au moins une torche de coupage et/ou de soudage,
- des moyens de déplacement susceptibles de permettre de déplacer au moins ladite torche de marquage plasma et au moins ladite torche de coupage et/ou de soudage selon au moins une direction de déplacement, de préférence selon plusieurs directions ou axes de déplacement, en particulier selon au moins trois axes (X, Y, Z) orthogonaux,
- des moyens d'alimentation en fluide de refroidissement susceptibles d'alimenter au moins ladite torche de marquage plasma et au moins ladite torche de coupage et/ou de soudage en au moins un fluide de refroidissement, telle de l'eau déminéralisée,
- des moyens d'alimentation en gaz susceptibles d'alimenter au moins ladite torche de marquage plasma et au moins ladite torche de coupage et/ou de soudage en au moins un gaz,
- des moyens d'alimentation en courant électrique susceptibles d'alimenter au moins ladite torche de marquage plasma et au moins ladite torche de coupage et/ou de soudage en courant électrique, et
- des moyens de pilotage susceptibles de commander au moins un déplacement de ladite torche de marquage plasma et de ladite torche de coupage et/ou de soudage relativement à ladite au moins une pièce à marquer et à couper et/ou à souder.

En tant que torches de coupage et/ou de soudage, on peut utiliser des torches de coupage et/ou de soudage par jet de plasma, par faisceau laser ou des torches d'oxycoupage ou analogues. De préférence, il s'agit d'une torche de coupage plasma.

Selon le cas, l'installation combinée selon l'invention peut comprendre l'une ou plusieurs des caractéristiques suivantes :
- les moyens de pilotage sont susceptibles de contrôler lesdits moyens de déplacement pour permettre un déplacement d'au moins ladite torche de marquage plasma selon au moins une trajectoire définissant au moins une partie d'un marquage à réaliser sur ladite pièce et/ou d'au moins ladite torche de coupage et/ou de soudage selon au moins une trajectoire de coupe et/ou selon au moins une trajectoire correspondant à un plan de soudure de ladite au moins une pièce.
- les moyens de pilotage sont susceptibles de commander, en outre, au moins un début et/ou un arrêt de l'alimentation d'au moins ladite torche de marquage plasma en fluide de refroidissement, en courant électrique et/ou en gaz et/ou au moins un début et/ou un arrêt de l'alimentation d'au moins ladite torche de coupage et/ou de soudage en fluide de refroidissement, en courant électrique et/ou en gaz.
- les moyens de pilotage sont susceptibles de commander lesdits moyens de déplacement pour permettre de déplacer ladite torche de marquage plasma et/ou ladite torche de coupage et/ou de soudage selon plusieurs directions de déplacement, notamment en translation et/ou en rotation.
- lesdits moyens de déplacement sont motorisés, de préférence lesdits moyens de déplacement comprennent au moins un moteur électrique et éventuellement au moins un codeur de position et/ou au moins une génératrice tachymétrique.
- elle comporte, en outre, des moyens de palpage susceptibles de permettre au moins une détermination d'au moins un paramètre représentatif de la distance séparant la torche de marquage plasma et/ou la torche de coupage et/ou de soudage d'une pièce à marquer et/ou à couper etlou à souder et, de préférence, d'ajuster ladite distance en fonction d'un paramètre représentatif d'une valeur de distance souhaitée.
- elle comporte, en outre, des moyens supports de pièce permettant de porter et/ou maintenir, au moins temporairement, au moins une pièce à marquer et/ou à couper et/ou à souder.
- elle comporte, en outre, des moyens d'approvisionnement en au moins une pièce à marquer et/ou des moyens d'évacuation d'au moins une pièce marquée.
- au moins une torche de coupage et/ou de soudage et au moins une torche de marquage plasma sont portée par une même sous-partie mobile de ladite structure-porteuse.
- la torche de marquage plasma et/ou la torche de coupage et/ou de soudage sont choisies parmi les torches plasma mono ou double-flux.
- la torche de coupage et/ou de soudage est choisie parmi les torches de soudage ou de coupage laser ou les torches d'oxycoupage.
- elle comporte, en outre, des moyens d'aspiration de fumée et/ou des moyens d'évacuation de déchets.
- les moyens de pilotage comprennent des moyens à commande numérique.
- la torche de marquage plasma et/ou la torche de coupage et/ou de soudage sont montées sur les moyens à glissières permettant de rapprocher et/ou d'éloigner lesdites torche de marquage et/ou torche de coupage et/ou de soudage de la surface supérieure d'au moins une pièce à travailler.

De plus, l'invention concerne aussi un procédé automatique combiné de marquage et de coupage d'au moins une pièce, notamment au moins une pièce métallique, au moyen d'au moins une torche de marquage plasma délivrant au moins un jet de marquage plasma et d'au moins une torche de coupage plasma délivrant au moins un jet de coupage plasma comprenant les étapes de :
(a) alimentation d'au moins une torche de marquage plasma en au moins un courant électrique et en au moins un gaz plasmagène et génération d'au moins un jet de marquage plasma ayant une énergie de marquage supérieure ou égale à un premier seuil d'énergie et inférieure à un deuxième seuil d'énergie, ledit premier seuil d'énergie correspondant à l'énergie minimale nécessaire pour obtenir au moins un changement local de coloration de la pièce à marquer et ledit deuxième seuil d'énergie correspondant à l'énergie nécessaire pour obtenir une fusion complète selon toute l'épaisseur de ladite pièce à marquer,
(b) alimentation d'au moins une torche de coupage plasma en au moins un courant électrique et en au moins un gaz plasmagène et génération d'au moins un jet de coupage plasma ayant une énergie de coupage supérieure ou égale audit deuxième seuil d'énergie correspondant à l'énergie nécessaire pour obtenir une fusion complète selon toute l'épaisseur de ladite pièce à couper,
(c) marquage par jet de plasma de ladite pièce à marquer en soumettant au moins une partie de ladite pièce à au moins ledit jet de marquage plasma ayant ladite énergie de marquage, et
(d) coupage par jet de plasma de ladite pièce à couper en soumettant au moins une partie de ladite pièce à au moins ledit jet de coupage plasma ayant ladite énergie de coupage.

En outre, l'invention concerne aussi un procédé automatique combiné de marquage et de soudage d'au moins une pièce, notamment au moins une pièce métallique, au moyen d'au moins une torche de marquage plasma délivrant au moins un jet de marquage plasma et d'au moins une torche de soudage délivrant au moins un flux gazeux de soudage comprenant les étapes de:
(a) alimentation d'au moins une torche de marquage plasma en au moins un courant électrique et en au moins un gaz plasmagène et génération d'au moins un jet de marquage plasma ayant une énergie de marquage supérieure ou égaie à un premier seuil d'énergie et inférieure à un deuxième seuil d'énergie, ledit premier seuil d'énergie correspondant à l'énergie minimale nécessaire pour obtenir au moins un changement de coloration de la pièce à marquer et ledit deuxième seuil d'énergie correspondant à l'énergie nécessaire pour obtenir une fusion complète selon toute l'épaisseur de ladite pièce à marquer,
(b) alimentation d'au moins une torche de soudage en au moins un courant électrique et fusion au moins partielle selon l'épaisseur de ladite au moins une pièce à souder,
(c) marquage par jet de plasma de ladite pièce à marquer en soumettant au moins une partie de ladite pièce à au moins ledit jet de marquage plasma ayant ladite énergie de marquage.

Pour ce faire, on peut utiliser des énergies de marquage correspondant à des puissances de 400 Watts pour l'énergie minimale à 4000 Watts pour l'énergie maximale, mais on choisit préférentiellement des énergies de marquage correspondant à des puissances de 500 Watts à 2000 Watts.

Si besoin est, l'homme, du métier est en mesure d'ajuster ou de régler l'énergie de marquage à déployer ou la puissance à délivrer pour permettre un marquage efficace et adéquat en fonction notamment de la nature et de l'épaisseur du matériau à marquer et en fonction de la profondeur et de la largeur du marquage à réaliser ou de la décoloration à obtenir.

De là, il va de soi que, dans certains cas, les puissances à mettre en oeuvre pourront être supérieures aux plages de valeurs suscitées ou, à l'inverse, inférieures à ces valeurs.

Selon le cas, le procédé de marquage combiné selon l'invention peut comprendre l'une ou plusieurs des caractéristiques données ci-après :
- le marquage plasma de ladite pièce à marquer est réalisé suivant d'une trajectoire de marquage prédéterminée définissant le marquage à réaliser.
- le marquage par jet de plasma de ladite pièce est réalisé préalablement au coupage par jet de plasma de ladite pièce.

En outre, un procédé ou une installation selon l'invention peut être mis en oeuvre dans une opération de marquage et de coupage ou de soudage de pièces métalliques, c'est-à-dire en un métal ou en alliages métalliques, en particulier de pièces en aluminium ou en alliages d'aluminium, en aciers de construction ou en aciers inoxydables

En outre, un procédé ou une installation selon l'invention peut être mis en oeuvre dans une opération de marquage et de coupage, de pièces en matériau polymère, telles des pièces plastiques

L'invention va maintenant être décrite plus en détail à l'aide des figures annexées données à titre illustratif mais non limitatif.

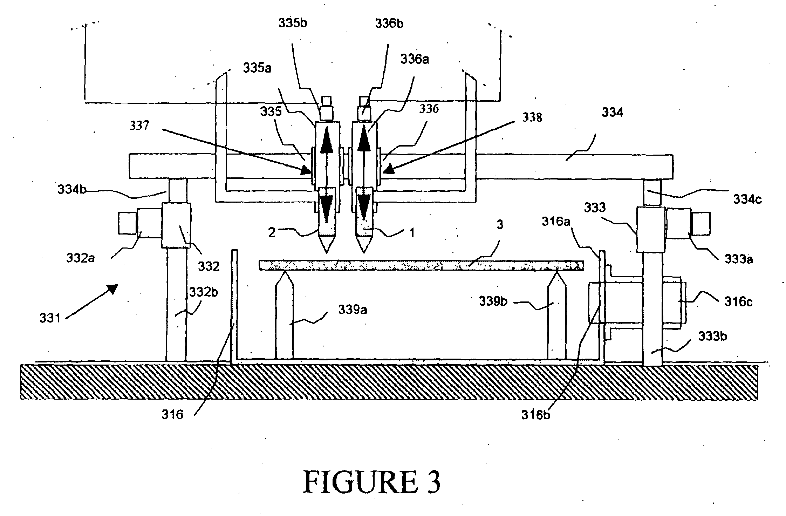

La figure 3 représente un schéma d'une installation automatique 331 combinée de marquage plasma/coupage de pièces 3 métalliques, telles des tôles en acier inoxydable, équipée, d'une part, d'un poste de découpe plasma 337 des pièces 3 métalliques comprenant une torche de coupage 2 plasma et, d'autre part, d'un poste de marquage 338 plasma desdites pièces 3 métalliques comprenant une torche de marquage 1 plasma, le poste de marquage plasma 338 étant situé en aval du poste 337 de découpe plasma.

Toutefois, cet agencement n'est pas limitatif et, dès lors, une installation combinée dont le poste de marquage plasma 338 serait situé en amont du poste 337 de découpe plasma ou une installation composée, par exemple, de plusieurs postes 337 de découpe plasma et/ou postes de marquage 338 plasma entrent également dans le cadre de la présente invention.

Il en va de même d'une installation combinée de marquage plasma/soudage équipée, d'une part, d'un poste de soudage comprenant une torche de soudage, telle une torche de soudage plasma, et, d'autre part, d'un postes de marquage plasma ou encore d'une installation mixte combinée de marquage plasma/soudage/coupage comportant au moins une torche de soudage, au moins une torche de coupage et au moins une torche de marquage plasma.

La torche 2 de coupage, ici une torche de coupage plasma de type classique, et son fonctionnement ne seront pas détaillé ci-après, étant donné que de telles torches de coupage plasma ont déjà été décrites dans de nombreux documents de l'art antérieur. Par exemple; une torche de coupage plasma utilisable ici est détaillée dans le document EP-A-599709 au nom de la Demanderesse, lequel est incorporé ici par référence.

En outre, la torche 1 de marquage plasma utilisée peut être de type mono-flux, c'est-à-dire une torche distribuant uniquement un flux de gaz, à savoir le jet de plasma servant au marquage de la pièce, ou de type double-flux, c'est-à-dire une torche distribuant plusieurs jets de gaz, à savoir un jet de plasma central servant au marquage de la pièce, lequel jet de plasma central est gainé par un flux gazeux périphérique formant un manchon protecteur gazeux autour dudit jet central de plasma.

Dans le cas d'une torche 1 de marquage de type double-flux, le deuxième flux, c'est-à-dire le flux périphérique de protection, concoure à améliorer la stabilité du jet de plasma dans son parcours entre la torche et la pièce à marquer, ainsi qu'à augmenter la densité de puissance déposée sur la pièce par refroidissement de la couche périphérique du jet central, par réduction de la section transversale de gaz ionisé et par augmentation de la constriction de l'arc électrique.

De plus, la torche 1 de marquage plasma peut également être conçue pour fonctionner selon un premier mode de fonctionnement dit à "arc non transféré" ou encore appelé "arc soufflé", ou bien selon un second mode de fonctionnement dit à "arc transféré" à la pièce.

Dans le mode à "arc soufflé", le courant électrique circule, à l'intérieur de la torche 1 de marquage plasma, entre la cathode et la tuyère formant anode, et le jet plasma est soufflé par le flux gazeux plasmagène au travers de l'orifice de sortie de la tuyère et forme ainsi un jet fin d'effluves plasmagène à haute température s'allongeant vers la pièce à marquer.

Le marquage est alors obtenu par coloration ou, le cas échéant, décoloration de la surface du matériau par effet thermique et/ou chimique, sensiblement sans enlèvement ou dépôt de matière, c'est-à-dire que ledit jet de plasma échauffe localement la surface de la pièce à marquer et, par réaction chimique avec l'air ambiant, il se forme des oxydes colorés dont l'intensité de couleur est fonction de la température atteinte lors de la réaction chimique s'opérant avec l'oxygène de l'air ambiant.

En d'autres termes, la largeur et l'intensité du marquage seront fonction notamment de la vitesse de déplacement de la torche 1 de marquage, de la nature du gaz plasma utilisé et de l'intensité du courant électrique débité dans la torche.

A titre d'exemple, des lignes de marquage ou marques d'une largeur de 0,5 à 1,5 mm et d'une coloration allant de jaune clair à noir profond, en passant par des nuances d'orange, de bleu et de marron, ont pu être ainsi obtenues.

Le marquage en mode à "arc soufflé" convient particulièrement bien pour les aciers inoxydables mais aussi pour les aciers de construction à surface décapée et les alliages légers, notamment lorsque les épaisseurs sont faibles, par exemples de 0.2 à 10 mm environ, ou qu'un affaiblissement des caractéristiques mécaniques des pièces de construction à marquer n'est pas envisageable.

Ensuite, si besoin est, les marques ainsi réalisées peuvent être effacées ou pour le moins atténuées par un traitement chimique approprié.

Par contre, dans le mode "arc transféré" à la pièce, le courant électrique circule entre la cathode de la torche et la pièce à marquer formant anode, de sorte que la presque totalité de l'énergie électrique et thermique du jet de plasma est déposée sur la pièce à marquer.

Dès lors, le marquage de la pièce est obtenu par enlèvement de matière, c'est-à-dire par formation d'une rainure en surface de ladite pièce à marquer dont la largeur et la profondeur seront fonction de la vitesse de déplacement de la torche 1 de marquage, du type de gaz plasmagène utilisé et de l'intensité du courant électrique alimentant ladite pièce.

A titre d'exemple, des rainures de marquage de 0,5 à 1,5 mm de largeur et d'une profondeur de quelques 1/100^{ièmes} de millimètre à environ 1 mm ont pu être ainsi obtenues.

De là, le marquage en mode "arc transféré" convient particulièrement bien non seulement pour les aciers de construction à surface de tôle non décapée, mais aussi pour les aciers inoxydables et les alliages légers dans la mesure ou le matériau est suffisamment épais, par exemple d'une épaisseur de 2 mm à 150 mm environ, et que les rainures n'affaiblissent pas de façon significative la tenue mécanique des éléments de construction ainsi traités.

Les marques réalisées par ce procédé ne sont, en général, pas effaçables ou seulement au prix d'un enlèvement de matière par surfaçage mécanique de la pièce marquée.

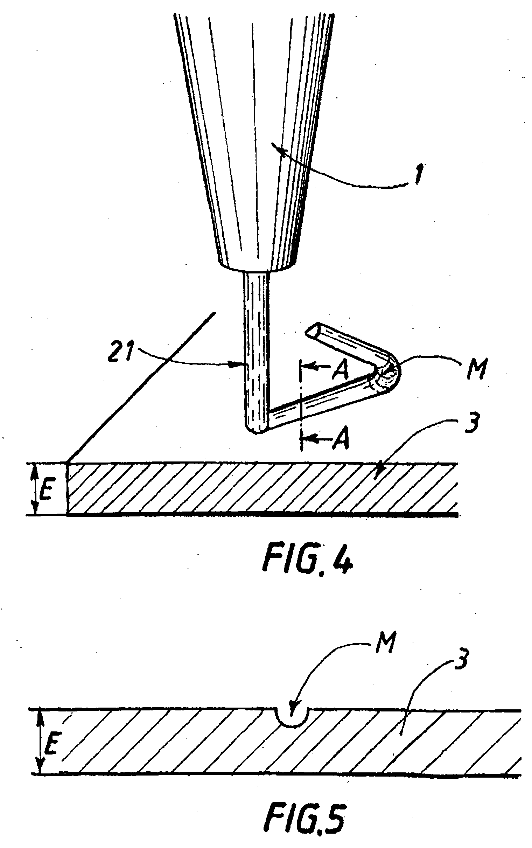

Le marquage en mode "arc transféré" est illustré sur les figures 4 et 5 schématisant une opération de marquage plasma d'une pièce 3 métallique où un jet de plasma 21 délivré par une torche de marquage plasma 1 permet d'obtenir le marquage M désiré en réalisant une rainure sur la surface supérieure de la pièce 3.

On voit nettement sur la figure 5, qui est une vue en coupe selon le plan A-A de la figure 4, que le marquage M a été obtenu par fusion partielle selon l'épaisseur E de la pièce 3 à marquer.

La largeur et la profondeur de la rainure constituant le marquage M sont fonction notamment de la vitesse de déplacement de la torche 1 de marquage, du type de gaz plasmagène utilisé et de l'intensité du courant électrique alimentant ladite pièce.

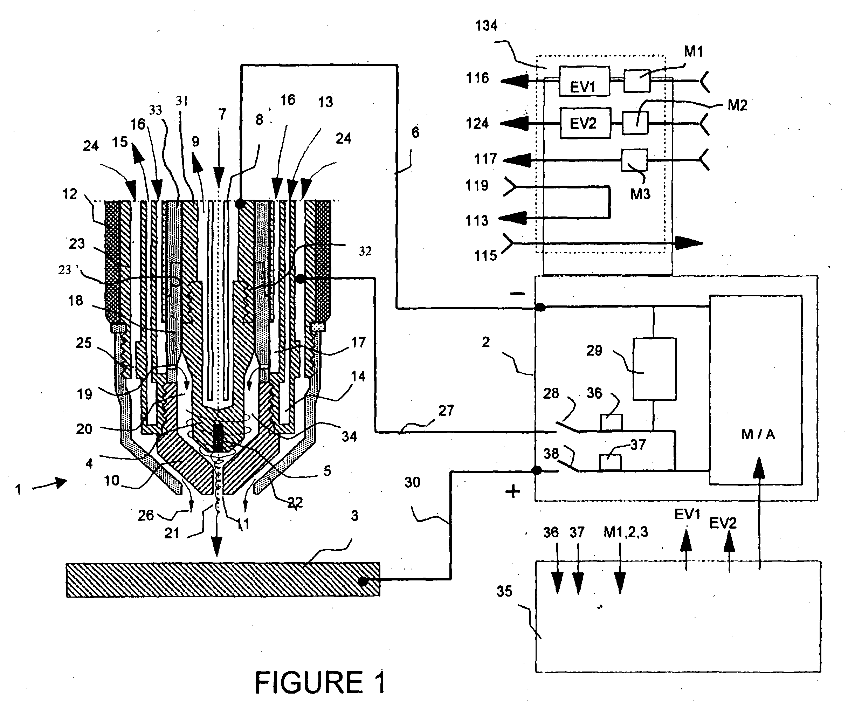

Par ailleurs, la figure 1 décrit, à titre d'exemple, une torche 1 de marquage plasma double-flux à fonctionnement selon un mode de marquage par "arc soufflé" ou par "arc transféré" à la pièce.

Plus précisément, sur la figure 1, on voit que la torche de marquage 1 plasma, représentée en coupe longitudinale partielle, se compose d'une électrode formée d'un corps 4 d'électrode, par exemple en cuivre ou un alliage cuivreux, dans lequel est inséré un insert émissif 5, généralement en hafnium pour un fonctionnement sous gaz plasmagène oxydant ou en tungstène pur ou allié pour un fonctionnement sous gaz plasmagène non oxydant.

La partie amont du corps d'électrode 4 est fixée à l'étanchéité, par exemple par vissage 32, à un support ou porte-électrode 31, réalisé par exemple en alliage cuivreux, lequel porte-électrode 31 est, en outre, relié au pôle négatif (-) d'une source de courant continu 2, tel un générateur de courant électrique, par l'intermédiaire d'un moyen de liaison adapté, tel un câble 6 de liaison électrique ou analogue.

Un fluide 7 de refroidissement, telle de l'eau déminéralisée ou un autre fluide spécialement conçut pour une telle utilisation, destiné à assurer un refroidissement par échange thermique au contact du corps d'électrode 4 et de l'insert émissif 5, parcours l'intérieur du corps d'électrode 4 en transitant notamment par un tube plongeur 8, avant d'être évacué par un passage périphérique 9 délimité, d'un côté, par la paroi externe dudit tube plongeur 8 et, de l'autre côté, par la paroi interne, d'une part, du corps d'électrode 4 et, d'autre part, du porte-électrode 31.

Le porte-électrode 31 et l'électrode 4, 5 sont entourés, de façon concentrique, par un corps principal 23 de torche, lequel est réalisé par exemple en un alliage de cuivre, tout en étant électriquement isolés de celui-ci par au moins une pièce en matériau isolant 33, tel un matériau polymère plastique ou une céramique, formant fourreau ou manchon et servant de guide d'alignement dudit porte-électrode 31 et dudit corps principal 23.

Le corps principal 23 de torche, qui comporte une chambre interne 14, a pour fonctions, d'une part, de permettre la circulation d'un fluide de refroidissement, par exemple de l'eau déminéralisée, à l'intérieur d'une chambre interne 14 entre une zone d'injection ou site d'entrée 13 et une zone d'évacuation ou site de sortie 15, et, d'autre part, de permettre l'alimentation de la chambre plasmagène 17, puis d'une chambre d'arc 34 située en aval, en un flux de gaz plasmagène à partir d'une entrée d'alimentation 16 en ledit gaz plasmagène.

L'extrémité aval de la torche 1 comporte, en outre, une tuyère 10, réalisée par exemple en un alliage cuivreux, dotée d'un orifice 11 central d'éjection du jet plasmagène 21, laquelle tuyère 10 est fixée, par exemple vissée, sur l'extrémité aval dudit corps principal 23, de façon coaxiale à l'électrode 4, 5 et en étant espacée de celle-ci de manière à délimiter la chambre d'arc 34, ladite chambre d'arc 34 ayant une section de révolution décroissant progressivement en se rapprochant de l'orifice d'éjection 11.

Une cloison interne 18, de forme générale cylindrique, réalisée dans un matériau isolant, par exemple une céramique, est fixée à l'étanchéité, d'une part, sur l'extrémité arrière de la tuyère 10 et, d'autre part, sur un alésage intérieur 23' du corps de torche 23 en formant la paroi intérieure de la chambre plasmagène 17.

Au moins un orifice 19 de passage de gaz plasmagène est- percé dans la cloison interne 18 de manière à créer un flux gazeux à écoulement préférentiellement tourbillonnaire dans la chambre d'arc 34.

En outre, une buse externe 22 est fixée au corps de torche 23 périphériquement et concentriquement à la tuyère 10 d'éjection du jet de plasma.

Le corps de torche 23 comporte également une section ou entrée d'alimentation 24 permettant le passage d'un flux de gaz de protection 26, distribué périphériquement et concentriquement au jet de gaz plasmagène 21 ou jet de plasma.

Avantageusement, la distribution dudit flux de gaz de protection 26 est réalisée au moyen d'orifices calibrés 25, répartis en couronne dans le corps de torche 23, de manière à distribuer ledit gaz de protection selon un écoulement axial ou tourbillonnaire, par exemple de même sens de rotation que le flux plasmagène, dans l'espace délimité par la paroi interne de la buse externe 22 et la paroi externe de la tuyère 10.

Afin d'éviter un contact électrique intempestif entre un élément métallique de la machine et la torche, une couche de revêtement 12 en matériau isolant, tel un matériau polymère plastique, est déposée sur toute la périphérie du corps principal 23 et isole électriquement ledit corps principal 23 de torche. Un revêtement similaire ou tout au moins ayant des propriétés d'isolement électrique analogues peut aussi revêtir la surface extérieure de la buse 22.

Par ailleurs, un moyen de liaison adéquat, tel un câble de liaison électrique 27, relie le corps de torche 23 au pôle positif (+) de la source 2 de courant continu, de manière à pouvoir alimenter la torche de marquage 1 plasma en courant électrique et par conséquent la tuyère 10, et permettre ainsi l'établissement et le maintien de l'arc électrique indispensable à l'obtention d'un jet de plasma 21 apte à réaliser un marquage efficace de la pièce 3 à marquer.

Pour ce faire, la pièce à marquer 3 est disposée à une distance déterminée sous le nez de la torche 1 de marquage, ladite pièce à marquer 3 étant également reliée par un câblé électrique 30 ou un moyen analogue au pôle positif (+) de la source 2 de courant.

Une source électrique auxiliaire 29 de haute tension et de haute fréquence est connectée entre les bornes positive (+) et négative (-) de la source 2 alimentant les moyens de liaison 27 et 6.

Un premier moyen à contact de sectionnement 28 et un dispositif de contrôle 36 de passage de courant, du type à relais d'intensité, sont agencés sur les moyens de liaisons ou câble d'alimentation 27 alimentant la tuyère 10.

De manière analogue, un deuxième contact de sectionnement 38 et un deuxième dispositif de contrôle 37 de passage de courant, également du type à relais d'intensité, sont agencés sur les moyens de liaisons 30 en courant électrique de la pièce à marquer.

En outre, un sous-ensemble 134 regroupe les systèmes de contrôle et d'actionnement séquentiel des différents fluides alimentant la torche de marquage 1, en particulier, le gaz plasmagène, le gaz de protection et le ou les fluides de refroidissement.

Ainsi, le sous-ensemble 134 comporte une électrovanne EV1 et un contrôleur de pression M1 sur la ligne d'alimentation 116 (reliée à l'entrée d'alimentation 16) en gaz plasmagène, une électrovanne EV2 et un contrôleur de pression M2 sur la ligne d'alimentation 124 en gaz de protection (reliée à l'entrée d'alimentation 24), un contrôleur de pression M3 sur la ligne d'alimentation 117 (reliée à l'entrée d'alimentation 7) en fluide de refroidissement, ainsi que des circuits 119, 113 et 115 alimentant les différentes parties de la torche 1 en fluide de refroidissement (reliés respectivement en 9, 13 et 15), comme expliqué ci-avant.

La source de courant 2 et le sous-ensemble 134 sont reliés et commandés par des moyens de pilotage 35, appelés directeur de commande 35, qui délivrent les ordres séquentiels pour un fonctionnement et un contrôle efficace de l'installation de marquage plasma.

Classiquement, des moyens de stockage des gaz plasmagène et de protection, par exemples des bouteilles de gaz sous pression, dotés de moyens de réglage et de régulation de pression sont placés en amont du sous-ensemble 134 et reliés, par des canalisations d'alimentation ou analogue, à la torche 1 de marquage par l'intermédiaire desdites lignes d'alimentation 116 et 124, respectivement.

De façon analogue, des moyens d'alimentation en fluide de refroidissement, par exemple de l'eau acheminée par canalisation ou issue d'un groupe de refroidissement autonome, sont reliés à la torche 1 de marquage par l'intermédiaire desdites lignes d'alimentation 117 et 113, respectivement.

Les lignes d'évacuation 115 et 119 du fluide de refroidissement assurent un retour du fluide de refroidissement réchauffé sortant de la torche 1 vers, par exemple, un regard d'égout ou, le cas échéant, au groupe de refroidissement autonome.

Le fonctionnement de la torche de marquage 1 plasma en mode "arc soufflé" et, le cas échéant, en mode "arc transféré" va être décrit successivement plus en détail ci-après, en références à la figure 1.

En mode "arc soufflé", sur ordre des moyens de pilotage 35, c'est-à-dire du directeur de commande 35, et après vérification de la disponibilité électrique de la source de courant 2 et de la bonne alimentation des différents circuits de fluide 134, 116 et 124 par les contrôleurs de pression M1, M2 et M3, il se produit un enchaînement des séquences suivantes :
- l'électrovanne EV1, alimentée en gaz plasmagène à la pression requise, s'ouvre en permettant ainsi l'alimentation de la torche de marquage 1 en gaz plasmagène et la création d'un flux de gaz plasmagène non-ionisé sortant par l'orifice 11 de la tuyère 10 ;
- le contact de sectionnement 28 se ferme, le contact de sectionnement 38 s'ouvre et la source de courant 2 délivre un courant électrique dont l'intensité correspond à la nature du marquage à effectuer, par exemple une intensité de 4 A à 30 A environ, ou une valeur d'intensité inférieure à l'intensité de marquage ;
- la source auxiliaire 29 est également activée ;
- une étincelle de haute fréquence (HF) jaillit alors entre l'extrémité de l'électrode 4, 5 et le fond de la tuyère 10 ;
- il s'opère alors une ionisation du gaz plasmagène par l'étincelle de HF, qui crée un chemin électrique propice à l'établissement d'un arc électrique d'une intensité de courant présélectionnée entre l'extrémité de l'électrode 4, 5 et le fond de la tuyère 10;
- le flux tourbillonnaire de gaz plasmagène entraîne, d'une part, le pied cathodique de l'arc vers le centre de l'extrémité de l'insert émissif 5 de l'électrode 4, 5 et, d'autre part, le pied anodique de l'arc électrique vers le canal ou orifice 11 de la tuyère 10 ;
- l'arc plasma ainsi stabilisé, s'allonge à l'extérieur de l'orifice 11 de la tuyère 10 et forme un jet fin d'effluves ou jet de plasma 21 à haute température, par exemple à une température proche de celle de la fusion du matériau à travailler, s'écoulant en direction de la pièce 3 à marquer et pouvant venir accomplir sa fonction de marquage de la pièce 3 ;
- le détecteur de courant 36 délivre alors au directeur de commande 35 une information attestant d'un allumage efficace de l'arc électrique ;
- de façon optionnelle, le directeur de commande 35 peut alors donner l'ordre d'ouverture de l'électrovanne EV2 d'alimentation en gaz de protection, réglé à une pression requise prédéterminée, par exemple une pression d'au moins 1,5.10⁵ Pa ;
- l'opération de marquage proprement-dit peu alors commencer grâce à l'intervention du commande du directeur de commande 35 qui commande les. différents organes et actionneurs pour obtenir, d'une part, une descente de la torche 1 de marquage et son maintien à une distance convenable et adéquate au-dessus de la pièce 3 à marquer et, d'autre part, un déplacement de ladite torche 1 pour décrire les trajectoires programmées ;
- en fin de programme de marquage et selon l'option choisie, le directeur de commande 35 peut soit commander un relevage rapide de la torche 1 de marquage pour la placer à une distance telle que le jet de plasma 21 n'ait plus d'influence sur la pièce 3 à marquer et/ou déplacer la torche 1 vers une nouvelle origine de programme de marquage, par exemple en vue du marquage d'une autre pièce à marquer, et enchaîner ensuite l'exécution de ce programme après avoir ramené la torche 1 de marquage à une distance convenable de la nouvelle pièce à marquer, soit, le cas échéant, commander l'extinction de l'arc plasma par commande d'arrêt de la source de courant 2 et de fermeture des électrovannes EV2 puis EV1.

En mode "arc transféré" à la pièce 3, l'allumage de la torche 1 de marquage débute par des séquences identiques ou analogues aux séquences du mode "arc soufflé".

Ainsi, là encore, on assiste d'abord à un allumage d'un premier arc soufflé constituant ce que l'on appelle alors un arc pilote, lequel à une valeur d'intensité de courant, en général, inférieure à celle requise pour l'arc de marquage 21 après transfert à la pièce 3. Ensuite, les séquences subséquentes sont les suivantes:
- le contact de sectionnement 38 se ferme ;
- après réception de l'information en provenance du détecteur de courant 36 et de l'exécution optionnelle de la séquence optionnelle susmentionnée, le directeur de commande 35 envoie, à l'actionneur de descente, un ordre de descente de la torche 1 de marquage plasma de manière à amener le jet de plasma 21 au contact de la pièce 3 à marquer ;
- lorsqu'une région suffisamment ionisée du jet 21 plasma atteint la pièce 3, un courant délivré par la source 2 de valeur d'intensité identique à celle de l'arc pilote peut alors être délivré depuis l'électrode 4, 5 vers la pièce 3. Le détecteur de courant 37 délivre alors, quant à lui, une information de passage de courant et il s'en suit que l'ouverture du contact de sectionnement 28 est commandée. Une éventuelle montée en intensité de courant est alors effectuée pour atteindre la valeur d'intensité de marquage présélectionnée, par exemple au moins 4 A.
- la séquence de marquage proprement-dite peu alors commencer par commande du directeur de commande 35 vers les différents actionneurs afin d'obtenir un maintien de la torche 1 à une distance adéquate au-dessus de la surface de la pièce 3 à marquer et les déplacements nécessaires de la torche 1 de manière à décrire les trajectoires préprogrammées et ainsi effectuer le marquage à réaliser ;
- en fin de programme de marquage et selon l'option choisie, le directeur de commande 35 peut soit commander une fermeture du contact de sectionnement 28 et simultanément une ouverture du contact de sectionnement 38 et éventuellement une diminution de l'intensité de courant pour revenir à une phase d'arc pilote, puis commander un relevage rapide de la torche 1 pour la placer à une distance telle que le jet plasma n'ait plus d'influence sur la pièce 3, un déplacement de la torche 1 vers une nouvelle origine de programme de marquage et un nouvel enchaînement de l'exécution de ce programme, après avoir ramené la torche 1 à une distance convenable de la nouvelle pièce 3 à marquer, soit commander, au contraire, une extinction complète de l'arc plasma par commande d'arrêt de la source de courant 2 et de fermeture des électrovannes EV2 puis EV1.

Une telle torche 1 de marquage plasma peut être utilisée indifféremment sur une installation globale ne présentant pas de poste de coupage plasma préalable ou subséquent ou, au contraire, sur une installation globale présentant un tel poste de coupage plasma- préalable ou subséquent ; on parle alors d'installation combinée de coupage et marquage plasma.

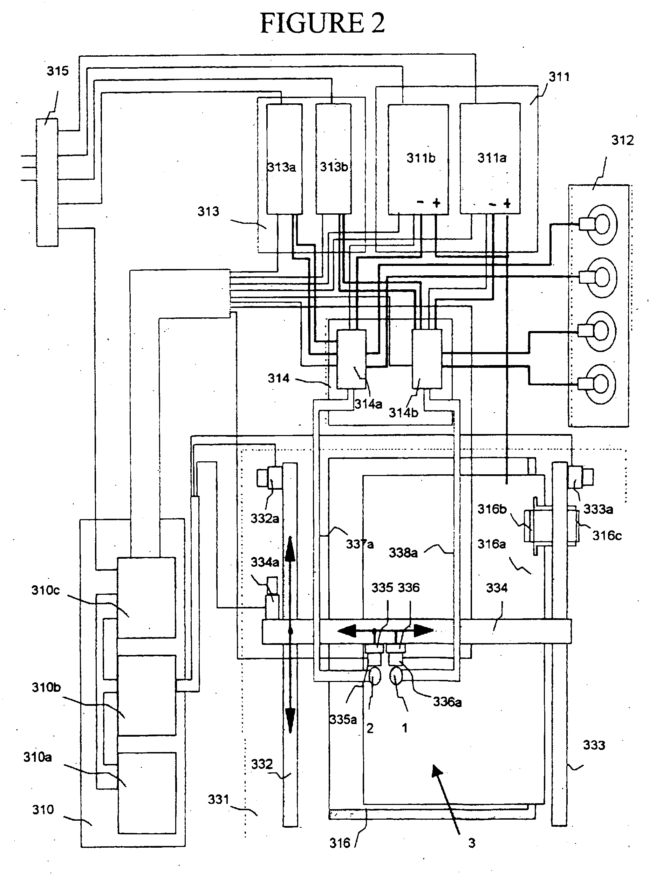

Une installation combinant un poste de coupage 337 plasma comprenant une. torche de coupage 2 plasma et un poste de marquage 338 plasma comprenant une torche de marquage 1 plasma est schématisée sur les figures 2 et 3.

Celle-ci comprend plusieurs sous-ensembles, à savoir notamment : une machine de travail 331 de pièces notamment métalliques ; des moyens de contrôle, de réglage et d'actionnement séquentiel des gaz 314 ; des moyens de refroidissement 313 des torches à plasma 1 et 2 ; des moyens d'alimentation en gaz 312 des torches à plasma 1 et 2 ; des moyens d'alimentations de puissance 311 des torches plasma et des moyens de pilotage 310, tel un directeur de commande 310.

Plus précisément, la machine de travail 331, qui est ici de type X-Y, comporte une structure-châssis portique 334 et est conçue pour entraîner à la ou aux vitesses de travail désirées, les torches de coupage 2 plasma et de marquage 1 plasma, par exemple à une vitesse d'environ 10 m.min⁻¹.

La machine de travail 331 se compose de deux axes parallèles 332 et 333 formant poutres longitudinales et dotés chacun un système de déplacement comprenant une motorisation électrique avec codeur de position et génératrice tachymétrique, ces systèmes de déplacement étant appelés communément actionneurs 332a et 333a.

Les deux axes parallèles 332 et 333 portent, par l'intermédiaire de deux entretoises 334b et 334c, un troisième axe 334 formant poutre transversale, lequel troisième axe 334 est orthogonal aux axes longitudinaux 332 et 333 et comporte également une motorisation avec codeur de position et génératrice tachymétrique, à savoir l'actionneur 334a.

L'axe 334 étant solidaire des coulisseaux motorisés 332a et 333a des axes 332 et 333, lorsque ces coulisseaux se déplacent simultanément et à la même vitesse, ils entraînent dans leur mouvement ledit axe 334 qui demeure toujours dans une direction orthogonale à celle desdits axes 332 et 333.

L'ensemble des axes 332, 333 et 334 est commandé ou piloté, de manière à ce que l'axe 334 se déplace dans un plan généralement parallèle au sol.

Deux boucliers 335 et 336 sont solidaires du coulisseau motorisé de l'axe 334 lequel entraîne alors, lorsqu'il se déplace, lesdits boucliers 335 et 336 selon une trajectoire parallèle à l'axe 334. Dès lors, on comprend que, lorsque l'on conjugue les mouvements des trois axes 332, 333 et 334, on fait décrire auxdits boucliers 335 et 336 une trajectoire dont la géométrie peut être très variée.

Une glissière à débattement vertical 335a est fixée au bouclier 335 de façon à ce que son axe de déplacement soit orthogonal à celui de l'axe 334.

Au coulisseau mobile de la glissière 335a est fixée une torche 2 de coupage plasma dont l'axe vertical est, d'une part, en coïncidence avec l'axe du jet de coupage plasma qu'elle délivre et, d'autre part, parallèle à l'axe de déplacement de la glissière 335a, de manière à pouvoir éloigner ou, à l'inverse, approcher la torche de coupage plasma 2 de la pièce 3 à couper et la placer ainsi à une distance adéquate de ladite pièce 3.

Par ailleurs, une deuxième glissière 336a à débattement vertical est fixée au deuxième bouclier 336 de telle façon que son axe de déplacement soit, lui aussi, orthogonal à celui de l'axe 334.

De manière analogue à ce qui précède, au coulisseau mobile de la glissière 336a est fixée une torche de marquage 1 plasma dont l'axe vertical est en coïncidence avec l'axe du jet de marquage plasma qu'elle génère et est, en outre, parallèle à l'axe de déplacement de la glissière 336a, de manière. à pouvoir, comme précédemment, éloigner ou, à l'inverse, approcher la torche de marquage plasma 2 de la pièce 3 à marquer et la placer ainsi à une distance adéquate de ladite pièce 3 pour pouvoir réaliser un marquage efficace de celle-ci.

Il est à noter que chacune des glissières 335a et 336a est aussi dotée d'une motorisation électrique avec génératrice tachymétrique et éventuellement codeur de position.

Un faisceau. de fils électriques relie les actionneurs 332a, 333a, 334a des axes 332, 333, et 334, respectivement, ainsi que leurs génératrices tachymétriques et codeurs de position respectifs, aux moyens de pilotage, à savoir le directeur de commande 310, qui gère les séquences marches/arrêts, règle les vitesses de déplacement des différents axes, ainsi que leurs positions conformément à un programme définissant des trajectoires préétablies.

Les actionneurs 335b et 336b des axes 335a et 336a, respectivement, ainsi que leurs génératrices tachymétriques et éventuellement leurs codeurs de position respectifs sont également reliés au directeur de commande 310 qui gère également les séquences- marches/arrêts, règle les vitesses de déplacement des différents axes ainsi qu'éventuellement leurs positions conformément au programme des séquences de marquage et de découpe préétablies.

Le maintien à une distance sensiblement constante des torches 1 de marquage et 2 de découpe par rapport au plan formé par la surface supérieure de la tôle 3 est obtenu grâce à un système de palpage du type asservi à la tension d'arc entre cathode et anode, c'est-à-dire dont le principe de fonctionnement est basé sur une mesure des valeurs de tension d'arc de chacune des torches 1 et 2, une comparaison de ces valeurs mesurées à des valeurs de consigne préétablies et un déplacement en fonction de cette comparaison des axes 335a et 336a portant chacune des torches 1 et 2, de manière à obtenir une modification des longueurs d'arc et donc une modification de la distance séparant les torches 1 et/ou 2 de la tôle 3 à travailler, jusqu'à obtention de valeurs mesurées de tension d'arc identiques ou peu différentes des valeurs des consignes préétablies. D'autres moyens de contrôle de la distance entre les torches 2 et 1, et la pièce 3 peuvent être mis en oeuvre, par exemple des capteurs mécaniques ou capacitifs.

Une tôle 3 à marquer et à découper est placée sous l'axe 334 et entre les axes 332 et 333, en appui sur de multiples points de soutien, par exemples les points de soutien formant un chantier porte-tôle, c'est-à-dire des moyens supports 339a et 339b de pièce 3.

La position de ces différents points de soutien 339a, 339b est déterminée de façon à ce que la surface de la tôle 3 soit préférentiellement placée dans un plan sensiblement parallèle au plan de déplacement de l'axe 334.

La tôle 3 et/ou le chantier porte-tôle, c'est-à-dire les moyens supports 339a et 339b, sont reliés via des câbles électriques aux pôles positifs (+) des deux générateurs de courant 311a et 311b.

En outre, un bac 316, ici de forme parallélépipédique et ayant une face supérieure ouverte donnant accès à la surface supérieure de tôle 3 à couper et à marquer, entoure le chantier porte-tôle 339a, 339b, de sorte que le volume ainsi formé puisse recueillir les scories et autres projections incandescentes générées par l'opération de coupage plasma de la tôle 3.

Afin d'assainir l'espace de travail, l'une des faces latérales 316a du bac 316 est percée d'au moins un orifice 316b doté d'un manchon tubulaire 316c destiné à recevoir une gaine tubulaire d'aspiration (non représentée) reliée à un groupe d'aspiration (non représenté) placé à distance, de manière à ce que le volume intérieur du bac 316 soit mis en communication avec ledit groupe d'aspiration.

Ainsi, lorsque ces moyens d'aspiration sont mis en marche, une dépression se créée dans le bac 316, via la gaine d'aspiration, le manchon de raccordement 316c et l'orifice 316b percé dans la face latérale 316a du bac 316, créant ainsi un flux de gaz d'aspiration circulant du bac 316 vers le groupe d'aspiration et les. fumées produites, en particulier durant l'étape de coupage plasma et majoritairement en-dessous de la tôle 3 en cours de découpe, peuvent alors être entraînées par les effets du flux de gaz d'aspiration vers le groupe d'aspiration qui lui-même les rejette, via une autre gaine tubulaire, à l'extérieur de l'atelier ou les dirigent vers un site de retraitement, tel un système de filtration. En effet, il est recommandé d'épurer les fumées de coupage en leur faisant traverser un système de filtration, comportant par exemple un ou plusieurs filtres, avant de procéder à leur rejet à l'atmosphère.

De plus, il est également possible de prévoir la présence de moyens d'aspiration complémentaires des fumées produites au-dessus de la tôle 3, en cours de découpe ou durant le marquage.

Par ailleurs, le directeur de commande 310, qui est relié à une alimentation générale 315 en courant électrique, comporte ici trois sous-unités principales, à savoir une commande numérique 310a, l'ensemble des moyens d'alimentation 310b pour les actionneurs d'axes et l'ensemble des moyens d'automatisation 310c électroniques ou électrotechniques délivrant et recevant les signaux propres à activer et à contrôler les différents organes constitutifs de l'installation ; ces trois sous-unités étant reliées entre elles par des moyens de communication de signaux logiques, numériques ou analogiques.

La commande numérique 310a comprend un écran de contrôle et un pupitre d'activation des différentes fonctions, à savoir les fonctions de programmation des profils géométriques des pièces à marquer et à découper, ainsi que des séquences d'allumage et d'extinction des jets plasma ; et les fonctions de simulations des parcours d'outils, de mise en mouvement des axes, d'enclenchement et d'arrêt des cycles de travail, ainsi que de mise en sécurité de l'ensemble de l'installation par un dispositif d'arrêt d'urgence par exemple.

L'ensemble des moyens d'alimentation 310b pour les actionneurs d'axes comporte, en outre, notamment des variateurs et régulateurs de vitesse, et des dispositifs de décodage des informations de position d'axe.

Par ailleurs, des moyens d'alimentation 311 de puissance des torches de marquage 1 et coupage 2 plasma se composent d'un premier générateur 311a et d'un deuxième générateur 311 b de courant continu.

Plus précisément, le premier générateur 311a de courant continu, par exemple de type onduleur, est réglable de 0 à 60 A et est dédié à l'alimentation en courant électrique de la torche de marquage plasma 1. Durant le marquage proprement-dit, le pôle positif du premier générateur 311a est relié à la tôle 3 à marquer formant anode et le pôle négatif est relié à l'électrode, formant cathode, de la torche de marquage 1 plasma.

En outre, le deuxième générateur 311b de courant continu, par exemple de type hacheur, est réglable de 0 à 300 A et est dédié à l'alimentation électrique de la torche de coupage 2 plasma. Durant le coupage, le pôle positif du générateur est relié à la tôle 3 à marquer formant anode et le pôle négatif à l'électrode, formant cathode, de la torche de coupage 2 plasma.

Chacun des deux générateurs 331a et 311b est relié, par ailleurs, par des câbles ou des faisceaux de fils électriques, d'une part, à une alimentation générale 315 en courant électrique et, d'autre part, au directeur de commande 310 qui délivre à ceux-ci les ordres et autres informations nécessaires permettant de sélectionner les gammes de puissance de travail ; et d'exécuter les différentes phases d'allumage d'arc à faible puissance, de montée à puissance de travail et d'extinction d'arc par coupure de la puissance.

D'autres ordres et informations peuvent aussi être échangés par le biais du faisceau de liaison, notamment des informations de mesure de la tension d'arc, de coupure de la puissance électrique pour des raisons thermiques, par exemple, devant entraîner un arrêt de l'installation par mise en sécurité, ...

Selon un autre mode de réalisation il est également possible de n'utiliser qu'une unique source de courant alimentant en alternance les deux torches.

D'autre part, des moyens d'alimentation 312 en gaz des torches de coupage 2 et marquage 1 plasma comprennent des moyens de stockage, en quantité suffisante, des gaz et mélanges gazeux destinés à l'alimentation des torches de coupage 2 et marquage 1 plasma, ainsi que des moyens de réglage et de régulation de la pression de distribution de ceux-ci.

Classiquement, la nature et la composition de ces gaz ou mélanges gazeux est fonction des travaux à effectuer.

En d'autres termes, l'opération de marquage plasma peut être réalisée en utilisant, d'une part, un gaz d'amorçage et, d'autre part, un gaz de marquage, ledit gaz d'amorçage pouvant, selon le type d'installation et de torche de marquage utilisées, être de même nature et/ou composition que le gaz de marquage ou, au contraire, de natures et/ou compositions différentes.

Ainsi, le gaz d'amorçage et le gaz de marquage peuvent être tous les deux de l'argon ou, au contraire, le gaz d'amorçage peut être de l'argon et le gaz de marquage être un autre gaz, par exemples de l'oxygène ou de l'azote, ou alors un mélange de plusieurs composés gazeux, par exemples des mélanges argon+hydrogène, azote+hydrogène ou plus simplement de l'air comprimé.

De plus, pour une torche de marquage 1 plasma de type double-flux, on utilise aussi un gaz de protection, lequel peut être de l'air comprimé ou alors, comme précédemment, un gaz ou mélanges de plusieurs composés gazeux de même nature et/ou composition que ceux utilisés comme gaz de marquage et/ou gaz d'amorçage.

Par ailleurs, l'opération de coupage plasma peut être effectuée en utilisant un gaz d'amorçage qui est, là encore, fonction du type d'installation et de torche de coupage 2 utilisées, et qui peut aussi être de même nature et/ou composition que le gaz de coupe ou, au contraire, de nature et/ou composition différentes.

Par exemple, le gaz d'amorçage peut être de l'argon et le gaz de coupe être de l'oxygène ou de l'air comprimé pour les aciers de construction ; ou de l'azote ou un mélange azote+hydrogène, argon+hydrogène ou azote+argon+hydrogène pour les aciers inoxydables et les alliages légers.

De plus, pour une torche de coupage 2 plasma de type double-flux, on utilise aussi un gaz de protection, lequel peut être de l'air comprimé ou alors, comme précédemment, un gaz ou mélanges de plusieurs composés gazeux, tel un mélange azote+oxygène pour les aciers de construction, ou de l'azote, voire du CO2, ou un mélange azote+hydrogène, azote+hydrocarbures, argon+hydrogène ou argon+hydrocarbures pour les aciers inoxydables et les alliages légers.

Le stockage des gaz peut être effectué dans des bouteilles sous pression ou en réservoirs cryogéniques ou encore, pour les mélanges azote+oxygène, produits sur le site par perméation de l'air au moyen, par exemple, d'un ou plusieurs modules membranaires, telle une installation FLOXAL™ commercialisée par la Société L'AIR LIQUIDE.

Par ailleurs, les moyens de refroidissement 313 des torches 1 et 2 plasma se composent ici d'un premier groupe de refroidissement 313b et d'un deuxième groupe de refroidissement 313a.

Le premier groupe de refroidissement 313b est d'une puissance adaptée aux besoins de la torche de marquage 1 plasma et le deuxième groupe de refroidissement 313a est d'une puissance adaptée aux besoins de la torche de coupage 2 plasma.

Les deux groupes de refroidissement 313a et 313b sont reliés à l'alimentation générale 315 en courant électrique et sont dotés de systèmes et d'organes de sécurité permettant de contrôler la circulation des fluides afin de n'autoriser le fonctionnement de l'installation de coupage/marquage plasma que si des valeurs minimales prédéterminées de pression et/ou de débit sont atteintes. A cet effet, les groupes de refroidissement 313b et 313a sont reliés, par un faisceau de fils électriques ou analogues, au directeur de commande 310, de manière à avoir une gestion centralisée de l'ensemble des informations de sécurité.

En variante, il est possible de n'avoir qu'un seul groupe de refroidissement, c'est-à-dire un groupe unique, doté de deux circuits, l'un pour la torche de marquage 1 plasma et l'autre pour la torche de coupage 2 plasma, et dont la puissance globale aurait été au minimum la somme des puissances nécessaires aux besoins des deux torches 1 et 2 plasma.

En l'absence de groupes de refroidissement autonomes, il est possible aussi d'utiliser le circuit d'eau de la ville.

Toutefois, quelle que soit la solution utilisée, pour garantir un bon fonctionnement des torches 1 et 2 à plasma sans risque de colmatage de leurs circuits de refroidissement par des dépôts minéraux ou métalliques et d'endommagement par des effets d'électrolyse entre deux parois de potentiels électriques différents, l'eau ou le liquide de refroidissement sont préférentiellement déminéralisés et ont avantageusement un pH neutre, de préférence compris entre 6,5 et 8,3, une dureté inférieure à 10° et une résistivité supérieure à 100 kΩ/cm²/cm. En outre, les moyens de contrôle, de réglage et d'actionnement séquentiel des gaz 314 comportent un premier sous-ensemble 314a et un deuxième sous-ensemble 314b.

Le premier sous-ensemble 314a est doté, d'une- part, de moyens de connections d'un faisceau 337a relié à la torche de coupage 2 plasma, ledit faisceau 337a regroupant l'ensemble des moyens d'alimentation électrique, en gaz et de circulation des fluides de refroidissement, lesquels sont nécessaires au bon fonctionnement de ladite torche de coupage 2 plasma et, d'autre part, des moyens de réglage des pressions et/ou des débits, des organes de sécurité pour permettre de contrôler efficacement la circulation des gaz afin de n'autoriser le fonctionnement de l'installation de coupage/marquage plasma que si des valeurs minimales prédéterminées de pression et/ou de débit sont atteintes, ainsi que des organes d'ouverture et de fermeture des circuits de gaz, par exemple des électrovannes, répondant aux commandes séquentielles du directeur de commande 310.

En outre, le sous-ensemble 314a est doté des moyens de raccordement des canalisations en provenance de la centrale d'alimentation en gaz 312, des moyens de raccordement des canalisations d'alimentation en fluide de refroidissement en provenance du groupe de refroidissement 313a, des moyens de connexion des câbles électriques de puissance en provenance du générateur 311b permettant l'alimentation de l'électrode et de la tuyère de la torche de coupage 2 plasma, ainsi que des moyens de connexion des faisceaux de fils électriques en provenance du directeur de commande 310 pour la gestion centralisée des fonctions de contrôle, de réglage et de commande des organes, en relation avec les gaz, contenus dans le sous-ensemble 314a.

Le deuxième sous-ensemble 314b est doté, d'une part, de moyens de connections d'un faisceau 338a relié à la torche de marquage 1 plasma, ledit faisceau 338a regroupant l'ensemble des moyens d'alimentation électrique, en gaz et de circulation des fluides de refroidissement, nécessaires au bon fonctionnement de ladite torche- de marquage 1 plasma et, d'autre part, des moyens de réglage des pressions et/ou des débits, des organes de sécurité pour le contrôle de la circulation des gaz afin de n'autoriser le fonctionnement de l'installation de coupage/marquage plasma que si des valeurs minimales prédéterminées de pression et/ou de débit sont atteintes, ainsi que des organes d'ouverture et de fermeture des circuits de gaz, par exemple des électrovannes, répondant aux commandes séquentielles du directeur de commande 310.

En outre, le sous-ensemble 314b comprend des moyens de raccordement des canalisations en provenance de la centrale d'alimentation en gaz 312, des moyens de raccordement des canalisations d'alimentation en fluide de refroidissement en provenance du groupe de refroidissement 313b, des moyens de connexion des câbles électriques de puissance en provenance du générateur 311 a permettant l'alimentation de l'électrode et de la tuyère de la torche de marquage 1 plasma, ainsi que des moyens de connexion des faisceaux de fils électriques en provenance du directeur de commande 310 pour la gestion centralisée des fonctions de contrôle, de réglage et de commande des organes, en relation avec les gaz, contenus dans le sous-ensemble 314b.

A cela peut être ajouté, pour garantir une utilisation correcte et un contrôle efficace de l'installation, non seulement un axe vertical ou axe (z-z) avec actionneur destiné à amener la tête de la torche de marquage plasma à une distance convenable de la tôle à marquer et à maintenir une distance sensiblement constante entre ladite tête de torche de marquage et ladite tôle à marquer, notamment au moyen d'un système de palpage, mais aussi des moyens de programmation des trajectoires et des positions de marquage en liaison avec la programmation de découpe, de façon à optimiser les temps de fabrication.

En outre, il est préférable, notamment dans le cas de la fabrication de petites pièces, de procéder en premier lieu à l'opération de marquage de la pièce, puis ensuite seulement à l'opération de coupage, de manière à éviter un éventuel décalage de la pièce coupée par rapport à l'origine programmée en raison de la libération de contraintes internes à la pièce durant le cycle thermique que lui fait subir le procédé de découpe.

De plus, il peut arriver également que les pièces soient insuffisamment soutenues par le chantier porte-tôle, c'est-à-dire les moyens-supports de pièces, et qu'en fin de découpe, lorsque la pièce se détache de la plaque de tôle au sein de laquelle elle est découpée, celle-ci bascule et/ou même tombe dans le bac inférieur de récupération des déchets et scories. Dès lors, dans les deux cas, toute opération de marquage subséquente serait inefficace.

En d'autres termes, il convient d'adapter le programmé de fabrication en fonction notamment de la taille des pièces à marquer et de la qualité du soutien du chantier porte-tôle.

De là, le programme de fabrication peut, par exemple, être conçu en deuxsous-programmes enchaînés, le premier sous-programme étant dédié au marquage de l'ensemble des pièces imbriquées dans le format de tôle à découper et le second étant dédié à la découpe de l'ensemble des pièces après marquage.

Une autre façon de procéder peut consister à réaliser une programmation alternée marquage/découpe pièce-à-pièce afin de réduire les parcours d'outils et donc le temps de fabrication global du programme de pièces imbriquées dans le format de tôle.

Bien entendu d'autres solutions intermédiaires peuvent aussi être envisagées.

En outre, pour réaliser un marquage des pièces en définissant des caractères alphanumériques, un générateur de caractères paramétrables est avantageusement intégré à l'installation.

Bien que le mode de réalisation précédent mette en oeuvre des torches à amorçage par haute fréquence, des torches à amorçage différent peuvent tout-à-fait être utilisées dans le cadre de la présente invention, notamment des torches à amorçage par court-circuit entre l'électrode et la tuyère, telle une torche analogue ou identique à celle décrite dans le document EP-A-599709 dont l'électrode se déplace relativement par rapport à la tuyère ou, au contraire, une torche dont la tuyère se déplace relativement à l'électrode pour réaliser le court-circuit nécessaire à l'amorçage.

## Revendications

1. Installation automatique combinée de marquage par jet de plasma et de coupage et/ou de soudage d'au moins une partie d'au moins une pièce (3) à marquer et à couper et/ou à souder comprenant :
- au moins une structure-porteuse (334) portant au moins une torche de marquage (1) plasma et au moins une torche (2) de coupage et/ou de soudage,
- des moyens de déplacement susceptibles de permettre de déplacer au moins ladite torche de marquage plasma et au moins ladite torche de coupage et/ou de soudage selon au moins une direction de déplacement,
- des moyens d'alimentation en fluide de refroidissement susceptibles d'alimenter au moins ladite torche de marquage plasma et au moins ladite torche de coupage et/ou de soudage en au moins un fluide de refroidissement,
- des moyens d'alimentation en gaz susceptibles d'alimenter au moins ladite torche de marquage plasma et au moins ladite torche de coupage et/ou de soudage en au moins un gaz,
- des moyens d'alimentation en courant électrique susceptibles d'alimenter au moins ladite torche de marquage plasma et au moins ladite torche de coupage et/ou de soudage en courant électrique, et
- des moyens de pilotage susceptibles de commander au moins un déplacement de ladite torche de marquage plasma et de ladite torche de coupage et/ou de soudage relativement à ladite au moins une pièce à marquer et à couper et/ou à souder.

2. Installation selon la revendication 1, caractérisée en ce que les moyens de pilotage sont susceptibles de contrôler lesdits moyens de déplacement pour permettre un déplacement d'au moins ladite torche de marquage plasma selon au moins une trajectoire définissant au moins une partie d'un marquage à réaliser sur ladite pièce et d'au moins ladite torche de coupage et/ou de soudage selon au moins une trajectoire de coupe et/ou selon au moins une trajectoire correspondant à un plan de soudure de ladite au moins une pièce.

3. Installation selon l'une des revendications 1 ou 2, caractérisée en ce que les moyens de pilotage sont susceptibles de commander, en outre, au moins un début et/ou un arrêt de l'alimentation d'au moins ladite torche de marquage plasma en fluide de refroidissement, en courant électrique et/ou en gaz et/ou au moins un début et/ou un arrêt de l'alimentation d'au moins ladite torche de coupage et/ou de soudage en fluide de refroidissement, en courant électrique et/ou en gaz.

4. Installation selon l'une des revendications 1 à 3, caractérisée en ce que les moyens de pilotage sont susceptibles de commander lesdits moyens de déplacement pour permettre de déplacer ladite torche de marquage plasma et ladite torche de coupage et/ou de soudage selon plusieurs directions de déplacement, notamment en translation et/ou en rotation.

5. Installation selon l'une des revendications 1 à 4, caractérisée en ce que lesdits moyens de déplacement sont motorisés.

6. Installation selon l'une des revendications 1 à 5, caractérisée en ce que les moyens de déplacement comprennent au moins un moteur électrique et éventuellement au moins un codeur de position et/ou au moins une génératrice tachymétrique.

7. Installation selon l'une des revendications 1 à 6, caractérisée en ce qu'elle comporte, en outre, des moyens de palpage susceptibles de permettre au moins une détermination d'au moins un paramètre représentatif de la distance séparant la torche de marquage plasma et/ou la torche de coupage et/ou de soudage d'une pièce à marquer et/ou à couper et/ou à souder et, de préférence, d'ajuster ladite distance en fonction d'un paramètre représentatif d'une valeur de distance souhaitée.

8. Installation selon l'une des revendications 1 à 7, caractérisée en ce qu'elle comporte, en outre, des moyens supports de pièce permettant de porter et/ou maintenir, au moins temporairement, au moins une pièce à marquer et/ou à couper et/ou à souder.

9. Installation selon l'une des revendications 1 à 8, caractérisée en ce qu'elle comporte, en outre, des moyens d'approvisionnement en au moins une pièce à marquer etlou des moyens d'évacuation d'au moins une pièce marquée.

10. Installation selon rune des revendications 1 à 9, caractérisée en ce qu'au moins une torche de coupage et/ou de soudage et au moins une torche de marquage plasma sont portée par une même sous-partie mobile de ladite structure-porteuse.

11. Installation selon l'une des revendications 9 ou 10, caractérisée en ce que la torche de marquage plasma et/ou la torche de coupage et/ou de soudage sont choisies parmi les torches plasma mono ou double-flux ou en ce que la torche de coupage et/ou de soudage est choisie parmi les torches de soudage ou de coupage laser et les torches d'oxycoupage.

12. Installation selon l'une des revendications 1 à 11, caractérisée en ce qu'elle comporte une torche de marquage plasma, une torche de coupage plasma et une torche d'oxycoupage.

13. Installation selon l'une des revendications 1 à 12, caractérisée en ce que les moyens de pilotage comprennent des moyens à commande numérique.

14. Installation selon l'une des revendications 1 à 12, caractérisée en ce que la torche de marquage plasma et/ou la torche de coupage et/ou de soudage sont montées sur les moyens à glissières permettant de rapprocher et/ou d'éloigner lesdites torche de marquage et/ou torche de coupage et/ou de soudage de la surface supérieure d'au moins une pièce à travailler.

15. Procédé automatique combiné de marquage et de coupage d'au moins une pièce (3), notamment au moins une pièce métallique, au moyen d'au moins une torche de marquage (1) plasma délivrant au moins un jet de marquage plasma et d'au moins une torche de coupage (2) plasma délivrant au moins un jet de coupage plasma comprenant les étapes de :
(a) alimentation d'au moins une torche de marquage plasma en au moins un courant électrique et en au moins un gaz plasmagène et génération d'au moins un jet de marquage plasma ayant une énergie de marquage supérieure ou égale à un premier seuil d'énergie et inférieure à un deuxième seuil d'énergie, ledit premier seuil d'énergie correspondant à l'énergie minimale nécessaire pour obtenir au moins un changement de coloration local de la pièce à marquer et ledit deuxième seuil d'énergie correspondant à l'énergie nécessaire pour obtenir une fusion complète selon toute l'épaisseur de ladite pièce à marquer,
(b) alimentation d'au moins une torche de coupage plasma en au moins un courant électrique et en au moins un gaz plasmagène et génération d'au moins un jet de coupage plasma ayant une énergie de coupage supérieure ou égale audit deuxième seuil d'énergie correspondant à l'énergie nécessaire pour obtenir une fusion complète selon toute l'épaisseur de ladite pièce à couper,
(c) marquage par jet de plasma de ladite pièce à marquer en soumettant au moins une partie de ladite pièce à au moins ledit jet de marquage plasma ayant ladite énergie de marquage, et
(d) coupage par jet de plasma de ladite pièce à couper en soumettant au moins une partie de ladite pièce à au moins ledit jet de coupage plasma ayant ladite énergie de coupage.

16. Procédé automatique combiné de marquage et de soudage d'au moins une pièce (3), notamment au moins une pièce métallique, au moyen d'au moins une torche de marquage (1) plasma délivrant au moins un jet de marquage plasma et d'au moins une torche de soudage (2) délivrant au moins un flux gazeux de soudage comprenant les étapes de:
(a) alimentation d'au moins une torche de marquage plasma en au moins un courant électrique et en au moins un gaz plasmagène et génération d'au moins un jet de marquage plasma ayant une énergie de marquage supérieure ou égale à un premier seuil d'énergie et inférieure à un deuxième seuil d'énergie, ledit premier seuil d'énergie correspondant à l'énergie minimale nécessaire pour obtenir au moins un changement de coloration de la pièce à marquer et ledit- deuxième seuil d'énergie correspondant à l'énergie nécessaire pour obtenir une fusion complète selon toute l'épaisseur de ladite pièce à marquer,
(b) alimentation d'au moins une torche de soudage en au moins un courant électrique et fusion au moins partielle selon l'épaisseur de ladite au moins une pièce à souder,
(c) marquage par jet de plasma de ladite pièce à marquer en soumettant au moins une partie de ladite pièce à au moins ledit jet de marquage plasma ayant ladite énergie de marquage.

## Patentansprüche

1. Kombinierte automatische Vorrichtung zum Signieren mittels Plasmastrahl und zum Schneiden und/oder Schweißen mindestens eines Bereichs mindestens eines zu signierenden und zu schneidenden und/oder zu schweißenden Werkstücks (3), die umfaßt:
- mindestens eine Tragstruktur (334), die mindestens einen Plasmasignierbrenner (1) und mindestens einen Schneid- und/oder Schweißbrenner (2) trägt,
- Mittel zum Verschieben, die es gestatten, mindestens den genannten Plasmasignierbrenner und mindestens den genannten Schneid- und/oder Schweißbrenner in mindestens einer Bewegungsrichtung zu verschieben,
- Mittel zum Zuführen des Kühlmittels, die mindestens den genannten Plasmasignierbrenner und mindestens den genannten Schneid- und/oder Schweißbrenner mit mindestens einem Kühlmittel versorgen können,
- Mittel zum Zuführen von Gas, die geeignet sind, mindestens den genannten Plasmasignierbrenner und mindestens den genannten Schneid- und/oder Schweißbrenner mit mindestens einem Gas zu versorgen,
- Mittel zur Versorgung mit elektrischem Strom, die geeignet sind, mindestens den genannten Plasmasignierbrenner und mindestens den genannten Schneid- und/oder Schweißbrenner mit elektrischem Strom zu versorgen, und
- Leitvorrichtungen, die geeignet sind, mindestens eine Bewegung des genannten Plasmasignierbrenners und des genannten Schneid- und/oder Schweißbrenners, bezogen auf das genannte mindestens eine zu signierende und zu schneidende und/oder schweißende Werkstück, zu steuern.

2. Vorrichtung nach Anspruch 1, dadurch gekennzeichnet, daß die Leitvorrichtungen geeignet sind, die genannten Mittel zum Verschieben zu regeln, um eine Bewegung mindestens des genannten Plasmasignierbrenners auf mindestens einer Bahn zu ermöglichen, die mindestens einen Teil einer auf dem genannten Werkstück anzubringenden Signierung definiert, sowie eine Bewegung mindestens des genannten Schneid- und/oder Schweißbrenners auf mindestens einer Schneidbahn und/oder mindestens einer Bahn, die einer Schweißebene des genannten mindestens einen Werkstücks entspricht.

3. Vorrichtung nach einem der Ansprüche 1 oder 2, dadurch gekennzeichnet, daß die Leitvorrichtungen geeignet sind, außerdem mindestens einen Start und/oder eine Unterbrechung der Versorgung mindestens des genannten Plasmasignierbrenners mit Kühlmittel, elektrischem Strom und/oder Gas und/oder mindestens einen Start und/oder eine Unterbrechung der Versorgung mindestens des genannten Schneid- und/oder Schweißbrenners mit Kühlmittel, elektrischem Strom und/oder Gas zu steuern.

4. Vorrichtung nach einem der Ansprüche 1 bis 3, dadurch gekennzeichnet, daß die Leitvorrichtungen geeignet sind, die genannten Mittel zum Verschieben zu steuern, um die Bewegung des genannten Plasmasignierbrenners und des genannten Schneid- und/oder Schweißbrenners in mehreren Bewegungsrichtungen, namentlich die Verschiebungs- und/oder Drehbewegung, zu ermöglichen.

5. Vorrichtung nach einem der Ansprüche 1 bis 4, dadurch gekennzeichnet, daß die genannten Mittel zum Verschieben motorisiert sind.

6. Vorrichtung nach einem der Ansprüche 1 bis 5, dadurch gekennzeichnet, daß die Mittel zum Verschieben mindestens einen Elektromotor und eventuell mindestens einen Positionskodierer und/oder mindestens einen Tachogenerator umfassen.

7. Vorrichtung nach einem der Ansprüche 1 bis 6, dadurch gekennzeichnet, daß sie außerdem Abtastmittel aufweist, die mindestens eine Bestimmung mindestens eines repräsentativen Parameters des Abstandes zwischen dem Plasmasignierbrenner und/oder dem Schneid- und/oder Schweißbrenner und vorzugsweise eine Einstellung des genannten Abstands in Abhängigkeit von einem repräsentativen Parameter eines gewünschten Abstandswertes gestatten.

8. Vorrichtung nach einem der Ansprüche 1 bis 7, dadurch gekennzeichnet, daß sie außerdem Auflagemittel für das Werkstück umfaßt, die zumindest vorübergehend mindestens ein zu signierendes und/oder zu schneidendes und/oder zu schweißendes Werkstück tragen und/oder halten können.

9. Vorrichtung nach einem der Ansprüche 1 bis 8, dadurch gekennzeichnet, daß sie außerdem Zuführmittel für mindestens ein zu signierendes Werkstück und/oder Abnahmemittel für mindestens ein signiertes Werkstück umfaßt.

10. Vorrichtung nach einem der Ansprüche 1 bis 9, dadurch gekennzeichnet, daß sie mindestens einen Schneid- und/oder Schweißbrenner und mindestens einen Plasmasignierbrenner umfaßt, die von ein und demselben beweglichen Unterteil der genannten Tragstruktur getragen werden.

11. Vorrichtung nach einem der Ansprüche 9 oder 10, dadurch gekennzeichnet, daß der Plasmasignierbrenner und/oder der Schneid- und/oder Schweißbrenner zu den Ein- oder Zweistromplasmabrennern gehören muß, oder dadurch, daß der Schneid- und/oder Schweißbrenner zu den Laserschweiß- oder - schneidbrennern und zu den Sauerstoffschneidbrennern gehören muß.

12. Vorrichtung nach einem der Ansprüche 1 bis 11, dadurch gekennzeichnet, daß sie einen Plasmasignierbrenner, einen Plasmaschneidbrenner und einen Sauerstoffschneidbrenner umfaßt.

13. Vorrichtung nach einem der Ansprüche 1 bis 12, dadurch gekennzeichnet, daß die Leitvorrichtungen numerische Steuermittel umfassen.

14. Vorrichtung nach einem der Ansprüche 1 bis 12, dadurch gekennzeichnet, daß der Plasmasignierbrenner und/oder der Schneid- und/oder Schweißbrenner auf Mittel mit Gleitschienen montiert sind, die es gestatten, den genannten Signierbrenner und/oder den genannten Schneid- und/oder Schweißbrenner an die obere Fläche mindestens eines zu bearbeitenden Werkstücks heranzuführen oder von ihr wegzuführen.

15. Kombiniertes automatisches Verfahren zum Signieren und Schneiden mindestens eines Werkstücks (3), namentlich mindestens eines Werkstücks aus Metall, mit Hilfe mindestens eines Plasmasignierbrenners (1) mit mindestens einem Plasmasignierstrahl und mit Hilfe mindestens eines Plasmaschneidbrenners (2) mit mindestens einem Plasmaschneidstrahl, das die folgenden Etappen umfaßt:
a) Versorgung mindestens eines Plasmasignierbrenners mit mindestens einem elektrischen Strom und mindestens einem plasmabildenden Gas und Bildung mindestens eines Plasmasignierstrahls mit einer Signierungsenergie, höher als eine erste Energieschwelle oder gleich einer ersten Energieschwelle und niedriger als eine zweite Energieschwelle, wobei die genannte erste Energieschwelle einer Mindestenergie entspricht, die erforderlich ist, um mindestens eine örtliche Farbänderung des zu signierenden Werkstücks zu erhalten, und wobei die genannte zweite Energieschwelle der Energie entspricht, die erforderlich ist, um ein vollständiges Schmelzen über die gesamte Dicke des genannten zu signierenden Werkstücks zu erreichen,
b) Versorgung mindestens eines Plasmaschneidbrenners mit mindestens einem elektrischen Strom und mindestens einem plasmabildenden Gas und Bildung mindestens eines Plasmaschneidstrahls mit einer Schneidenergie, höher als die genannte zweite Energieschwelle oder gleich der genannten zweiten Energieschwelle, die der Energie entspricht, die erforderlich ist, um ein vollständiges Schmelzen über die gesamte Dicke des genannten zu schneidenden Werkstücks zu erreichen,
c) Signieren des genannten zu signierenden Werkstücks mittels Plasmastrahl, indem mindestens ein Bereich des genannten Werkstücks mindestens dem genannten Plasmastrahl mit der genannten Schneidenergie ausgesetzt wird, und
d) Schneiden des genannten zu schneidenden Werkstücks mittels Plasmastrahl, indem mindestens ein Bereich des genannten Werkstücks mindestens dem genannten Plasmastrahl mit der genannten Schneidenergie ausgesetzt wird.

16. Kombiniertes automatisches Verfahren zum Signieren und zum Schweißen mindestens eines Werkstücks (3), namentlich mindestens eines Werkstücks aus Metall, mit Hilfe mindestens eines Plasmasignierbrenners (1) mit mindestens einem Plasmasignierstrahl und mindestens eines Schweißbrenners (2) mit mindestens einem gasförmigen Flußmittel, das die folgenden Etappen umfaßt:
a) Versorgung mindestens eines Plasmasignierbrenners mit mindestens einem elektrischen Strom und mindestens einem plasmabildenden Gas und Bildung mindestens eines Plasmasignierstrahls mit einer Signierungsenergie, höher als eine erste Energieschwelle oder gleich einer ersten Energieschwelle und niedriger als eine zweite Energieschwelle, wobei die genannte erste Energieschwelle einer Mindestenergie entspricht, die erforderlich ist, um mindestens eine örtliche Farbänderung des zu signierenden Werkstücks zu erhalten, und wobei die genannte zweite Energieschwelle der Energie entspricht, die erforderlich ist, um ein vollständiges Schmelzen über die gesamte Dicke des genannten zu signierenden Werkstücks zu erreichen,
b) Versorgung mindestens eines Schweißbrenners mit mindestens einem elektrischen Strom und mindestens teilweises Schmelzen über die Dicke des genannten mindestens einen zu schweißenden Werkstücks,
c) Signieren des genannten zu signierenden Werkstücks mittels Plasmastrahl, indem mindestens ein Bereich des genannten Werkstücks mindestens dem genannten Plasmastrahl mit der genannten Schneidenergie ausgesetzt wird.

## Claims

1. Combined automatic installation for plasma-jet marking and for cutting and/or welding at least a part of at least one workpiece (3) to be marked and cut and/or welded, comprising:
- at least one carrying structure (334) carrying at least one plasma-marking torch (1) and at least one cutting and/or welding torch (2),
- drive means capable of moving at least the said plasma-marking torch and at least the said cutting and/or welding torch in at least one direction of motion,
- coolant supply means capable of supplying at least the said plasma-marking torch and at least the said cutting and/or welding torch with at least one coolant,
- gas supply means capable of supplying at least the said plasma-marking torch and at least the said cutting and/or welding torch with at least one gas,
- electric-current supply means capable of supplying at least the said plasma-marking torch and at least the said cutting and/or welding torch with electric current, and
- control means capable of initiating at least one movement of the said plasma-marking torch and of the said cutting and/or welding torch relative to the said at least one workpiece to be marked and cut and/or welded.

2. Installation according to Claim 1, characterized in that the control means are capable of controlling the said drive means so as to make it possible to move at least the said plasma-marking torch along at least one path defining at least one part of a mark to be made on the said workpiece and/or at least the said cutting and/or welding torch along at least one cutting path and/or along at least one path corresponding to a welding plane of the said at least one workpiece.

3. Installation according to either of Claims 1 and 2, characterized in that the control means are capable of furthermore initiating at least one start and/or stop of the coolant, electric-current and/or gas supply to at least the said plasma-marking torch, and/or at least one start and/or stop of the coolant, electric-current and/or gas supply to at least the said cutting and/or welding torch.

4. Installation according to one of Claims 1 to 3, characterized in that the control means are capable of controlling the said drive means in order to move the said plasma-marking torch and the said cutting and/or welding torch in several directions of motion, in particular in translation and/or rotation.

5. Installation according to one of Claims 1 to 4, characterized in that the said drive means are motorized.

6. Installation according to one of Claims 1 to 5, characterized in that the drive means comprise at least one electric motor and, optionally, at least one position encoder and/or at least one tacho generator.

7. Installation according to one of Claims 1 to 6, characterized in that it furthermore has sensing means capable of allowing at least one determination of at least one parameter representing the distance separating the plasma-marking torch and/or the cutting and/or welding torch from a workpiece to be marked and/or cut and/or welded and, preferably, adjusting the said distance as a function of a parameter representing a desired distance value.

8. Installation according to one of Claims 1 to 7, characterized in that it furthermore has workpiece-support means for carrying and/or holding, at least temporarily, at least one workpiece to be marked and/or cut and/or welded.

9. Installation according to one of Claims 1 to 8, characterized in that it furthermore has means for delivering at least one workpiece to be marked and/or means for removing at least one marked workpiece.

10. Installation according to one of Claims 1 to 9, characterized in that at least one cutting and/or welding torch and at least one plasma-marking torch are carried by the same moving subunit of the said carrying structure.

11. Installation according to either of Claims 9 and 10, characterized in that the plasma-marking torch and/or the cutting and/or welding torch are selected from single- or double-flow plasma torches, or in that the cutting and/or welding torch is selected from laser-welding or laser-cutting torches and oxycutting torches.

12. Installation according to one of Claims 1 to 11, characterized in that it has a plasma-marking torch, a plasma-cutting torch and an oxycutting torch.

13. Installation according to one of Claims 1 to 12, characterized in that the control means comprise numerical-control means.

14. Installation according to one of Claims 1 to 12, characterized in that the plasma-marking torch and/or the cutting and/or welding torch are mounted on means with rails for moving the said marking torch and/or cutting and/or welding torch towards and/or away from the upper surface of at least one workpiece to be processed.

15. Combined automatic process for marking and cutting at least one workpiece (3), in particular at least one metal workpiece, using at least one plasma-marking torch (1) delivering at least one plasma-marking jet and at least one plasma-cutting torch (2) delivering at least one plasma-cutting jet, comprising the following steps:
(a) supplying at least one plasma-marking torch with at least one electric current and with at least one plasma gas, and generating at least one plasma-marking jet having a marking energy greater than or equal to a first energy threshold and less than a second energy threshold, the said first energy threshold corresponding to the minimum energy required to obtain at least one local change in coloration of the workpiece to be marked, and the said second energy threshold corresponding to the energy required to obtain complete melting through the full thickness of the said workpiece to be marked,
(b) supplying at least one plasma-cutting torch with at least one electric current and at least one plasma gas, and generating at least one plasma-cutting jet having a cutting energy greater than or equal to the said second energy threshold corresponding to the energy required to obtain complete melting through the full thickness of the said workpiece to be cut,
(c) plasma-jet marking the said workpiece to be marked by subjecting at least one part of the said workpiece to at least the said plasma-marking jet having the said marking energy, and
(d) plasma-jet cutting the said workpiece to be cut by subjecting at least one part of the said workpiece to at least the said plasma-cutting jet having the said cutting energy.

16. Combined automatic process for marking and welding at least one workpiece (3), in particular at least one metal workpiece, using at least one plasma-marking torch (1) delivering at least one plasma-marking jet and at least one welding torch (2) delivering at least one welding gas flow, comprising the following steps:
(a) supplying at least one plasma-marking torch with at least one electric current and with at least one plasma gas, and generating at least one plasma-marking jet having a marking energy greater than or equal to a first energy threshold and less than a second energy threshold, the said first energy threshold corresponding to the minimum energy required to obtain at least one change in coloration of the workpiece to be marked, and the said second energy threshold corresponding to the energy required to obtain complete melting through the full thickness of the said workpiece to be marked,
(b) supplying at least one welding torch with at least one electric current and at least partially melting through the thickness of the said at least one workpiece to be welded,
(c) plasma-jet marking the said workpiece to be marked by subjecting at least one part of the said workpiece to at least the said plasma-marking jet having the said marking energy.
